# FASCICULE DE BREVET EUROPEEN

(11) **EP 1 868 697 B1**
(45) Date de publication et mention de la délivrance du brevet: **16.02.2011**
(21) Numéro de dépôt: 06743643.6
(22) Date de dépôt: 06.04.2006
(51) Int. Cl.: B01D 11/04, B01L 3/00, B01J 19/00, B01F 13/00, B81B 1/00

(54) **PROCEDE D'EXTRACTION D'AU MOINS UN COMPOSE D'UNE PHASE LIQUIDE COMPRENANT UN LIQUIDE IONIQUE FONCTIONNALISE, ET SYSTEME MICROFLUIDIQUE POUR LA MISE EN OEUVRE DE CE PROCEDE**
VERFAHREN ZUR EXTRAKTION MINDESTENS EINER VERBINDUNG AUS EINER FLÜSSIGEN PHASE, WELCHE EINE IONISCHE FLÜSSIGKEIT UMFASST, UND MIKROFLUIDISCHES SYSTEM ZUR IMPLEMENTIERUNG BESAGTER METHODE
METHOD FOR EXTRACTING AT LEAST ONE COMPOUND FROM A LIQUID PHASE COMPRISING A FUNCTIONALIZED IONIC LIQUID, AND MICROFLUIDIC SYSTEM FOR IMPLEMENTING SAID METHOD

(30) Priorité: 19.04.2005 FR 0503887
(43) Date de publication de la demande: 26.12.2007
(73) Titulaire: Commissariat à l'Énergie Atomique et aux Énergies Alternatives, 75015 Paris (FR)
(72) Inventeur: DELAPIERRE, Guillaume, F-38450 Vif (FR); SARRUT, Nicolas, F-38170 Seyssinet-Pariset (FR); MARCHAND, Gilles, F-38119 Pierre Chatel (FR)
(74) Mandataire: Bolinches, Michel Jean-Marie
(86) Numéro de dépôt international: PCT/FR2006/000759
(87) Numéro de publication internationale: WO 2006/111628

(56) Documents cités:
- EP-A- 1 466 894
- WO-A-96/12541
- WO-A-99/54730
- WASHIZU M: "ELECTROSTATIC ACTUATION OF LIQUID DROPLETS FOR MICROREACTOR APPLICATIONS" IEEE TRANSACTIONS ON INDUSTRY APPLICATIONS, IEEE INC. NEW YORK, US, vol. 34, no. 4, juillet 1998 (1998-07), pages 732-737, XP000848012 ISSN: 0093-9994

## Description

La présente invention concerne un procédé d'extraction d'au moins un composé chimique ou biologique d'une phase liquide comprenant au moins un liquide ionique fonctionnalisé, et un système microfluidique pour la mise en oeuvre de ce procédé.

Les liquides ioniques à température ambiante (« LITA » en abrégé) ou "room temperature ionic liquid" (« RTIL » en abrégé en anglais) sont de plus en plus utilisés en synthèse organique à cause de leurs propriétés particulièrement intéressantes (cf. « Room Temperature Ionic liquids. Solvents for synthesis and catalysis » T. Welton, Chemical Reviews 1999, 2071-2083). En effet, ce sont des solvants peu volatils et à tension de vapeur réduite qui sont compatibles avec la plupart des réactifs chimiques connus et qui sont stables thermiquement, peu inflammables, et recyclables.

En plus de ces applications en tant que solvants réactionnels, les liquides ioniques à température ambiante présentent de nombreux avantages pour l'extraction liquide-liquide et liquide-gaz. Tout comme les fluides supercritiques ou les solvants fluorés, ces liquides ioniques sont généralement non miscibles aux solvants organiques volatils (« VOS » en abrégé en anglais) et, du fait de leurs tensions de vapeur très élevées, ils peuvent être séparés par distillation directe dans ces solvants (cf. « Modern Separation techniques for the efficient Workup in Organic Synthesis » C.C. Tzschucke et coll. Angewandte Chemie, Engl. Int. Ed. 2002, 3964-4000).

Il est connu dans la littérature d'utiliser ces liquides ioniques comme fluides d'extraction lors des opérations de séparation suivantes ;
- extraction diphasique liquide ionique - autre solvant ou phase aqueuse (cf. "RT ionic liquids as novel media for clean liquid-liquid extraction" J.G. Huddleston et coll. Chem. Commun. 1998, 1765-1766);
- micro-extraction liquide - liquide à l'aide d'une goutte d'un liquide ionique couplée à la chromatographie en phase liquide (cf. "Ionic liquid-based liquid-phase microextraction, a new sample enrichment procedure for liquid chromatography" J. Liu et coll. J. Chromatograph. A 2004, 1026, 143-147);
- séparations de contaminants gazeux, liquides, soufrés dans les hydrocarbures (cf. documents de Brevet WO-A-2003/070667, et WO-A-2003/040264) ;
- séparation de composés présentant des points d'ébullition très proches (cf. document de Brevet WO-A-2002/074718) ; et
- extraction de métaux lourds par des complexants dans des liquides ioniques (cf. "First application of calixarenes as extractants in room-temperature ionic liquids" S. Kojiro, Chemistry Letters 2004, 320-321).

On notera que toutes ces opérations de séparation visent à extraire un composé à l'aide d'un fluide d'extraction constitué d'un liquide ionique, c'est-à-dire à faire migrer par transfert de matière ce composé d'une phase liquide vers le liquide ionique.

On s'est intéressé récemment à des liquides ioniques à température ambiante fonctionnalisés, encore appelés liquides ioniques dédiés ou à tâches spécifiques (« LITS » en abrégé dans la suite de la présente description), qui sont particulièrement bien adaptés à la synthèse supportée en phase homogène. On pourra se reporter à ce sujet au document de Brevet WO-A-2004/029004.

Ces liquides ioniques fonctionnalisés cumulent les avantages des synthèses en phase liquide et sur support solide, du fait qu'ils permettent :
- en phase liquide, de réaliser un grand nombre de réactions, d'optimiser rapidement les conditions opératoires et de synthétiser des produits en quantités élevées, et
- sur support solide, une purification rapide par lavages successifs du support solide dans divers solvants.

La Demande de Brevet Français FR-A-2872715 déposée le 8 juillet 2004 au nom de la Demanderesse et du Centre National de la Recherche Scientifique, présente un système microfluidique comportant un microréacteur qui est constitué d'une goutte comprenant au moins un liquide ionique fonctionnalisé ou non. Ce microréacteur est sans paroi, l'interface du ou des liquide(s) ionique(s) avec le milieu ambiant et avec le support sur lequel la goutte est déposée définissant les limites du microréacteur.

Cette Demande de Brevet se rapporte également à des procédés de mise en oeuvre de réactions chimiques ou biochimiques et/ou de mélanges utilisant ce microréacteur de type goutte, et elle mentionne l'extraction et/ou la purification du ou des produit(s) issu(s) de la réaction effectuée dans la goutte de liquide ionique.

Washizu: "Electrostatic Actuation of liquid Droplets for Microreactor Applications", IEEE Transactions on Industrial Applications, Vol. 34, N°4, juillet/août 1998 divulgue un système micro fluidique du type présentant un substrat dont une surface est recouverte d'électrodes adaptées pour y déplacer, sous l'effet d'un champ électrique, des microgouttes.

Un but de la présente invention est de proposer un procédé d'extraction d'au moins un composé chimique ou biologique d'une phase liquide comprenant au moins un liquide ionique fonctionnalisé, via un fluide liquide d'extraction immiscible avec le(s)dit(s) liquide(s) ionique(s), qui permette de réaliser notamment des opérations unitaires :
(i) de purification d'une microgoutte comprenant un mélange, d'une part, de molécules d'au moins un composé chimique ou biologique supportées par au moins un liquide ionique fonctionnalisé et, d'autre part, d'un excès de ce(s) composé(s) n'ayant pas réagi avec ces molécules supportées et/ou de sous-produits de la réaction de ce liquide ionique avec ce(s) composé(s), pour l'extraction de cet excès de composés n'ayant pas réagi et/ou de ces sous-produits ; et
(ii) de clivage du support dans une microgoutte comprenant des molécules de composés chimiques ou biologiques supportées par au moins un liquide ionique fonctionnalisé, pour l'extraction de ces composés.

A cet effet, le procédé d'extraction selon l'invention comprend un déplacement, sur une surface d'un système microfluidique, d'au moins une microgoutte de ladite phase liquide dans un bain d'extraction qui comprend ledit fluide d'extraction et qui est localisé sur ladite surface pour l'obtention en sortie dudit bain, sous l'effet d'un champ électrique, d'un extrait s'éloignant de ladite surface qui est à base dudit fluide d'extraction et qui est enrichi en ledit ou l'un au moins desdits composé(s), et d'un raffinat évoluant sur ladite surface qui est à base dudit liquide(s) ionique(s) et qui est appauvri en ledit ou l'un au moins desdits composé(s).

Selon une autre caractéristique de l'invention, on déplace ladite microgoutte dans ledit bain sous l'effet dudit champ électrique, de telle manière qu'elle évolue au contact de ladite surface.

Selon une autre caractéristique de l'invention, on met en circulation par convection forcée et en continu ledit fluide d'extraction dans ledit bain, pour que ledit raffinat obtenu soit constitué dudit ou desdits liquide(s) ionique(s) (i.e. pour l'obtention de ce(s) dernier(s) à l'état pur).

Dans le cas (i) ci-dessus, ledit extrait obtenu comprend alors un mélange, d'une part, dudit fluide d'extraction et, d'autre part, dudit excès dudit ou desdits composé(s) n'ayant pas réagi et/ou dudit ou desdits sous-produits de réaction, et ledit raffinat comprend lesdites molécules supportées.

Dans le cas (ii) ci-dessus, ledit extrait obtenu comprend alors, par clivage dudit support, un mélange dudit fluide d'extraction et desdits composés séparés dudit liquide ionique fonctionnalisé, et ledit raffinat comprend ce dernier.

Par « phase liquide comprenant au moins un liquide ionique fonctionnalisé » qui constitue ladite microgoutte utilisable selon l'invention, on entend dans la présente description un mélange :
- d'au moins un composé chimique ou biologique, et
- d'un liquide ionique fonctionnalisé pur, d'un mélange de liquides ioniques fonctionnalisés purs ou encore un mélange d'un ou plusieurs liquide(s) ionique(s) fonctionnalisé(s) et d'un ou plusieurs liquide(s) ionique(s) non fonctionnalisé(s) éventuellement avec un ou plusieurs solvant(s).

On notera que ledit ou chaque composé peut être lié audit ou à chaque liquide ionique fonctionnalisé ou bien être libre dans le mélange.

Le ou chaque liquide ionique fonctionnalisé (i.e. dédié ou à tâche spécifique) qui est utilisable dans la microgoutte selon l'invention se présente sous forme liquide à température ambiante, et il peut être représenté par la formule A₁⁺X₁⁻, dans laquelle :
a) A₁⁺ représente un cation, fonctionnel ou non ou bien un mélange de cations dans lequel soit aucun des cations n'est fonctionnel, soit l'un au moins des cations est fonctionnel,
b) X₁⁻ est un anion fonctionnel ou non, ou un mélange d'anions dans lequel soit aucun des anions n'est fonctionnel soit l'un au moins des anions est fonctionnel, à condition que
c) le cation A₁⁺ et/ou l'anion X₁⁻soient porteurs d'au moins une fonction capable de réagir avec ledit composé chimique ou biologique.

On notera qu'un liquide ionique A₁⁺X₁⁻ fonctionnalisé (i.e. comportant au moins un ion fonctionnel) peut servir pour une part de milieu réactionnel et pour une autre part de support soluble ou matrice, alors qu'un liquide ionique A₁⁺X₁⁻ non fonctionnalisé sert uniquement de milieu réactionnel inerte ou de matrice vis-à-vis des réactifs et est capable de les dissoudre.

L'expression « cation fonctionnel » désigne un groupe moléculaire qui possède au moins une fonction chimique, une partie de ce groupe portant une charge positive. L'expression « anion fonctionnel » désigne un groupe moléculaire qui possède au moins une fonction chimique, une partie de ce groupe portant une charge négative. L'expression « cation non fonctionnel » désigne un groupe moléculaire sans fonction chimique, une partie de ce groupe portant une charge positive. L'expression « anion non fonctionnel » désigne un groupe moléculaire sans fonction chimique, une partie de ce groupe portant une charge négative.

Dans la présente invention, il est possible d'utiliser en tant que A₁⁺ un cation fonctionnel ou un mélange de cations dont l'un au moins est fonctionnel, et/ou en tant que X₁⁻ un anion fonctionnel ou un mélange d'anions dont l'un au moins est fonctionnel, lesdits cations fonctionnels et anions fonctionnels correspondant à une entité ionique respectivement cationique ou anionique liée à au moins une fonction Fᵢ, Fᵢ variant de Fₒ à Fₙ et n étant un nombre entier variant de 1 à 10.

La fonction Fᵢ peut notamment être choisie parmi les fonctions suivantes : hydroxyle, carboxylique, amide, sulfone, amine primaire, amine secondaire, aldéhyde, cétone, éthényle, éthynyle, diényle, éther, époxyde, phosphine (primaire, secondaire ou tertiaire), azoture, imine, cétène, cumulène, hétérocumulène, thiol, thioéther, sulfoxyde, groupements phosphorés, hétérocycles, acide sulfonique, silane, stannane ou aryle fonctionnel, et toute fonction résultant d'une transformation chimique, thermique, photochimique ou par irradiation micro-onde des fonctions précédentes.

Certains liquides ioniques fonctionnalisés, en particulier ceux avec de gros anions tels que NTf2⁻, PF₆⁻, BF₄⁻ ou CF₃SO₃⁻, peuvent être liquides à température ambiante ou fondre à basse température, par exemple 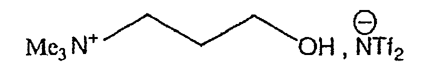 est liquide à température ambiante (Tf représentant CF₃SO₂).

Avantageusement, ledit ou l'un au moins desdits liquides ioniques fonctionnalisés utilisable selon l'invention est choisi dans le groupe constitué par un sel d'ammonium, un sel d'imidazolium, un sel de phosphonium, un sel d'onium et un mélange de plusieurs de ces sels.

On peut par exemple utiliser un sel d'onium fonctionnalisé de formule A₁⁺X₁⁻, comme support de réaction qui comporte un cation fonctionnel et/ou un anion fonctionnel correspondant à une entité ionique Y-, à savoir respectivement cationique Y⁺- ou anionique Y⁻-, liée éventuellement par l'intermédiaire d'un bras L, notamment un groupe alkyle comprenant de 1 à 20 atomes de carbone, à au moins une fonction Fᵢ, Fᵢ variant de Fₒ à Fₙ et n étant un nombre entier variant de 1 à 10, le cation fonctionnel pouvant être représenté sous la forme Y⁺-L-Fᵢ, et l'anion fonctionnel sous la forme Y⁻ (L)ₖ-Fᵢ, k étant égal à 0 ou 1, et l'anion fonctionnel pouvant représenter, lorsque k est égal à 0, un anion simple, correspondant à Y⁻Fᵢ, notamment choisi parmi :

OH⁻, F⁻, CN⁻, RO⁻, RS⁻, RS0₃⁻, RCO₂-, RBF₃-, où R représente un groupement alkyle comprenant de 1 à 20 atomes de carbone ou un groupement aryle comprenant de 6 à 30 atomes de carbone.

L'expression « sel d'onium fonctionnalisé » désigne les sels d'ammonium, de phosphonium, de sulfonium, ainsi que tous les sels résultant de la quaternarisation d'une amine, d'une phosphine, d'un thioéther ou d'un hétérocycle contenant l'un ou plusieurs de ces hétéroatomes, et portant au moins une fonction Fᵢ. Cette expression désigne aussi un sel d'onium dont le cation tel que défini ci-dessus n'est pas fonctionnalisé mais dont l'anion porte une fonction Fᵢ. Cette expression peut également désigner un sel dont l'anion et le cation portent une fonction Fᵢ. Un sel d'onium fonctionnalisé préféré est notamment choisi parmi les suivants : 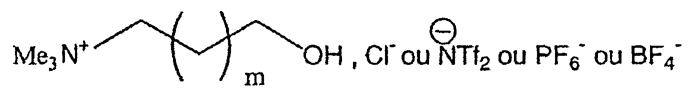 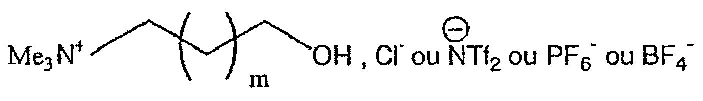 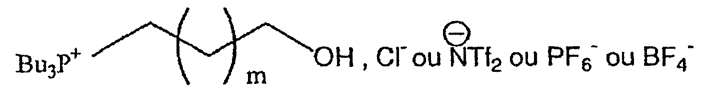 m étant un nombre entier compris de 0 à 20.

A titre d'exemples de liquides ioniques non fonctionnalisés utilisables dans les microgouttes selon l'invention en association avec un ou des liquides ioniques fonctionnalisés, on peut par exemple citer des sels d'onium choisis parmi les cations imidazolium, pyridinium Me₃N⁺-Bu ou Bu₃P⁺-Me, et les anions NTf₂⁻, PF₆⁻ ou BF₄⁻, tels que le 1-butyl-3-méthylimidazolium tétrafluoroborate [bmim] [BF₄], le 1-butyl-3-méthylimidazolium hexafluorophosphate [bmim] [PF₆], le 1-butyl-3-méthylimidazolium bis (trifluorométhylsulfonyl) imide [bmim] [NTf₂], le 1-éthyl-3-methylimidazolium hexafluorophosphate [émim] [PF₆] et le butyltriméthylammonium bis (trifluorométhylsulfonyl) imide [btma] [NTf₂].

Selon une autre caractéristique de l'invention, ledit fluide d'extraction utilisé dans le procédé d'extraction selon l'invention peut être de type solvant organique ou aqueux, et il comprend avantageusement au moins un solvant organique volatil (« VOS » en anglais) choisi dans le groupe constitué par l'éther diéthylique, l'acétate d'éthyle et les solvants chlorés tels que le dichlorométhane, le chloroforme ou le tétrachlorure de carbone.

En variante, ledit fluide d'extraction peut comprendre au moins un solvant aqueux, tel que de l'eau soumise à une désionisation.

Selon une autre caractéristique avantageuse du procédé d'extraction selon l'invention, on déplace ladite microgoutte électriquement conductrice au contact de ladite surface sous l'effet d'un champ électrique, de préférence en déplaçant par électro-mouillage (« EWOD » en anglais pour « ElectroWetting on Dielectric ») ladite microgoutte à la fois dans ledit bain et en amont et en aval de ce dernier, via une pluralité d'électrodes recouvrant ladite surface.

Ces électrodes, supportées par le substrat du système microfluidique, sont isolées et traitées en surface pour l'obtention d'un mouillage faible desdites microgouttes baignant dans ledit fluide d'extraction. On notera que ces microgouttes sont électriquement conductrices, de par le ou chaque liquide ionique qu'elles contiennent, alors que ledit fluide extracteur présente une conductivité électrique pratiquement nulle.

Avantageusement, on met en oeuvre le procédé d'extraction selon l'invention en déplaçant ladite microgoutte d'une manière continue dans ledit bain, ce qui permet d'optimiser le transfert de matière par diffusion forcée entre ladite microgoutte à purifier et ledit fluide d'extraction.

Encore plus avantageusement, on déplace ladite microgoutte dans ledit bain selon un trajet prédéterminé et préférentiellement autour d'une zone centrale du bain, par exemple d'une manière circulaire, ce qui permet de localiser efficacement ledit bain sur ladite surface du système microfluidique.

Selon un premier mode de réalisation de l'invention, ledit bain et ledit extrait sont respectivement obtenus par au moins un courant d'amenée dudit fluide d'extraction et par au moins un courant d'extraction dudit bain, l'un au moins de ces courants d'amenée et d'extraction étant véhiculé dans un capillaire qui s'étend et débouche au-dessus de ladite surface.

Selon un premier exemple de mise en oeuvre de ce premier mode selon l'invention, ledit bain d'extraction est formé par une goutte dudit fluide d'extraction que l'on dépose sur ladite surface et qui communique avec tout l'espace ambiant situé au-dessus de ladite surface, et l'un au moins desdits courants d'amenée et d'extraction circule à l'intérieur d'un capillaire sous lequel est formée ladite goutte d'extraction.

Selon un second exemple de mise en oeuvre de ce premier mode selon l'invention, ledit bain d'extraction est formé par un volume confiné dudit fluide d'extraction qui est délimité par deux parois respectivement inférieure et supérieure formées par ladite surface et par une plaque montée sur ladite surface, ledit volume communiquant sensiblement avec tout l'espace ambiant latéral compris entre lesdites parois, et l'un au moins desdits courants d'amenée et d'extraction circulant à l'intérieur d'un capillaire débouchant dans un orifice de ladite plaque et communiquant avec ledit volume confiné.

Selon un second mode de réalisation de l'invention, ledit bain et ledit extrait sont respectivement obtenus par au moins un courant d'amenée dudit fluide d'extraction et par au moins un courant d'extraction dudit bain, l'un au moins de ces courants d'amenée et d'extraction s'étendant dans la masse dudit système microfluidique en débouchant à ladite surface.

Selon un premier exemple de mise en oeuvre de ce second mode selon l'invention, ledit bain d'extraction est formé par une goutte dudit fluide d'extraction que l'on dépose sur ladite surface et qui communique avec tout l'espace ambiant compris au-dessus de ladite surface, et l'un au moins desdits courants d'amenée et d'extraction circulant à l'intérieur d'un canal enterré dans ledit système microfluidique, sur lequel est formée ladite goutte d'extraction.

Selon un second exemple de mise en oeuvre de ce second mode selon l'invention, ledit bain d'extraction est formé par un volume confiné dudit fluide d'extraction qui est délimité par deux parois respectivement inférieure et supérieure formées par ladite surface et par une plaque montée sur ladite surface, ledit volume communiquant sensiblement avec tout l'espace ambiant latéral compris entre lesdites parois, et l'un au moins desdits courants d'amenée et d'extraction circulant à l'intérieur d'un canal enterré dans ledit système microfluidique et affleurant ladite surface.

Conformément à ces premier et second exemples des premier et second modes précités selon l'invention :
- lesdits courants d'amenée et d'extraction débouchent avantageusement dans ledit bain sensiblement perpendiculairement à ladite surface,
- ledit courant d'extraction est recyclé avantageusement en continu dans ledit courant d'amenée, cette « régénération » du fluide d'extraction permettant d'en réduire la quantité utilisée, et
- ledit bain d'extraction (i.e. ladite goutte d'extraction ou ledit volume confiné) est ouvert sur l'espace ambiant en au moins deux de ses côtés opposés, pour le déplacement au contact de ladite surface de ladite microgoutte en amont et en aval dudit bain.

Conformément au premier exemple relatif aux premier ou second modes précités selon l'invention, on retire ladite goutte d'extraction de ladite surface par aspiration pour l'obtention dudit extrait.

De préférence, la microgoutte constituée de ladite phase liquide que l'on soumet à l'extraction selon l'invention présente un volume compris entre 0,1 µL et 10 µL, et le volume de cette microgoutte est prévu très inférieur à celui du bain d'extraction pour optimiser la diffusion dans ce dernier.

Un système microfluidique selon l'invention pour la mise en oeuvre du procédé d'extraction tel que défini ci-dessus est du type présentant un substrat dont une surface est recouverte d'électrodes adaptées pour y déplacer, sous l'effet d'un champ électrique, des microgouttes d'une phase liquide comprenant au moins un liquide ionique fonctionnalisé.

Selon l'invention, ce système microfluidique est pourvu de moyens pour amener un fluide liquide d'extraction sur ladite surface et pour l'en extraire par convection forcée, de sorte à obtenir un bain d'extraction qui soit localisé sur ladite surface pour l'extraction d'au moins un composé chimique ou biologique de ladite phase liquide et qui soit ouvert sur l'espace ambiant en au moins deux de ses côtés opposés, pour le déplacement au contact de ladite surface de ladite microgoutte en amont et en aval dudit bain.

A titre de substrat utilisable dans ledit dispositif d'analyse, on peut citer tout substrat minéral ou organique et biocompatible.

En relation avec le premier mode précité selon l'invention, ce système est avantageusement tel que lesdits moyens pour amener et extraire ledit fluide d'extraction comportent respectivement deux capillaires dont l'un au moins s'étend et débouche au-dessus de ladite surface et perpendiculairement à cette dernière.

En relation avec le second mode précité selon l'invention, ce système est avantageusement tel que lesdits moyens pour amener et extraire ledit fluide d'extraction comportent respectivement deux canaux dont l'un au moins est enterré dans ledit système microfluidique et affleure ladite surface perpendiculairement à cette dernière, de sorte à communiquer avec ledit bain.

En relation avec ledit premier exemple des premier et second modes selon l'invention, lesdits moyens pour amener et extraire ledit fluide d'extraction sont adaptés pour que ledit bain d'extraction soit formé par une goutte dudit fluide d'extraction communiquant avec tout l'espace ambiant situé au-dessus de ladite surface.

En relation avec ledit premier exemple du second mode selon l'invention, lesdits canaux sont adaptés pour que ladite goutte formant ledit bain recouvre les extrémités respectives de ces canaux.

En relation avec ledit second exemple des premier et second modes selon l'invention, ledit système microfluidique comporte en outre une plaque qui est montée sur ladite surface via des supports verticaux et qui délimite avec ladite surface deux parois respectivement supérieure et inférieure définissant un volume confiné pour ledit bain, lequel communique sensiblement avec tout l'espace latéral ambiant compris entre lesdites parois. Cette plaque peut éventuellement servir de contre-électrode dans le processus d'électro-mouillage.

En relation avec ledit second exemple dudit second mode selon l'invention, lesdits canaux affleurent ladite surface entre des supports verticaux qui relient la périphérie de ladite plaque à ladite surface, de sorte à former ledit volume confiné formant ledit bain.

Selon une autre caractéristique de l'invention, ledit système microfluidique est avantageusement tel que :
- les électrodes recouvrant le substrat, telles que des électrodes en or, sont recouvertes d'un isolant électrique, tel que de la silice ou du nitrure de silicium (Si₃N₄) et
- ladite plaque est à base de verre borosilicaté ou d'une matière plastique, et lesdits supports sont à base d'une résine photosensible telle qu'une résine époxy, cette plaque étant déposée sur ces supports via une colle.

Les caractéristiques précitées de la présente invention, ainsi que d'autres, seront mieux comprises à la lecture de la description suivante de plusieurs exemples de réalisation de l'invention, donnés à titre illustratif et non limitatif, ladite description étant réalisée en relation avec les dessins joints, parmi lesquels :
la figure 1 est un diagramme de processus de synthèse illustrant des exemples d'applications du procédé d'extraction selon l'invention,
la figure 2 est une vue schématique en perspective d'un système microfluidique selon un premier mode de réalisation de l'invention,
la figure 3 est une vue schématique en perspective d'un système microfluidique selon une variante de réalisation de la figure 2,
la figure 4 est une vue schématique en perspective d'un système microfluidique selon un second mode de réalisation de l'invention,
la figure 5 est une vue schématique en perspective d'un système microfluidique selon une variante de réalisation de la figure 4,
la figure 6 illustre schématiquement diverses étapes d'un procédé de fabrication d'un substrat vu en coupe d'un système microfluidique selon la figure 2,
la figure 7 illustre schématiquement un procédé de fabrication d'une contre-électrode vue en coupe et destinée à être assemblée sur le substrat de la figure 6, et
la figure 8 une vue schématique en coupe d'un système microfluidique selon la figure 2 obtenu par assemblage de la contre-électrode de la figure 7 sur le substrat de la figure 6.

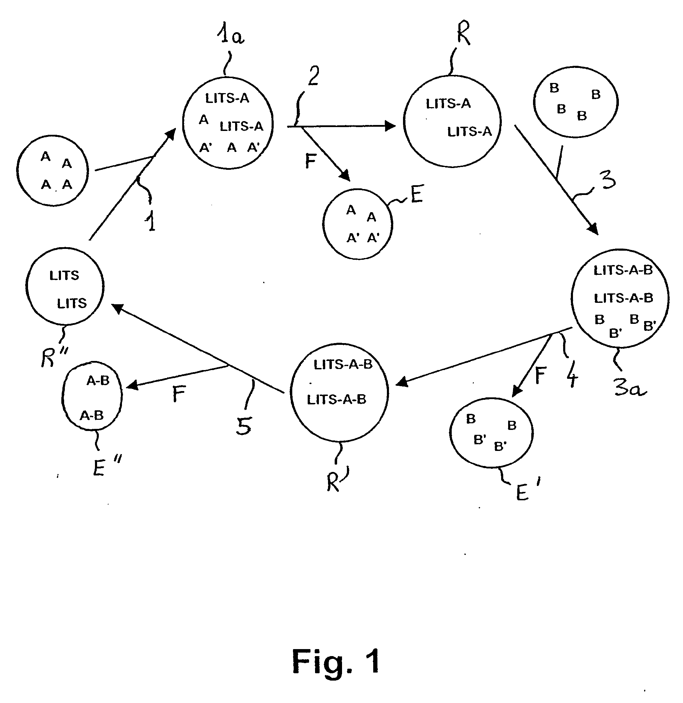

La figure 1 illustre un procédé de synthèse mettant en oeuvre la réaction A + B --> A-B sur un support comprenant au moins un liquide ionique fonctionnalisé « LITS », cette réaction pouvant être de type chimique (création de liaison covalente), biologique (réaction d'affinité, telle qu'hybridation, interaction anticorps-antigène, protéine-substrat, à titre non limitatif).

L'étape 1 de ce procédé illustre une première réaction entre des molécules de ce liquide ionique LITS et des molécules d'un premier réactif A, pour l'obtention d'un mélange 1a comprenant des molécules supportées LITS-A, des molécules du réactif A en excès n'ayant pas réagi et des molécules A' correspondant à un sous-produit de cette première réaction.

L'étape 2 de ce procédé illustre une première opération unitaire de séparation du réactif A qui n'a pas réagi et du sous-produit A', par une extraction liquide-liquide selon l'invention appliquée à ce mélange 1a via un fluide d'extraction F. On obtient ainsi un extrait E comprenant, outre le fluide d'extraction F, des molécules de A et de A', et un raffinat R comprenant les molécules supportées LITS-A.

L'étape 3 de ce procédé illustre une seconde réaction entre ces molécules supportées LITS-A du raffinat R et des molécules d'un second réactif B, pour l'obtention d'un mélange 3a comprenant des molécules supportées LITS-A-B, des molécules du réactif B en excès n'ayant pas réagi avec les molécules supportées LITS-A et des molécules B' correspondant à un sous-produit de cette seconde réaction.

L'étape 4 de ce procédé illustre une seconde opération unitaire de séparation du réactif B qui n'a pas réagi et du sous-produit B', par une extraction liquide-liquide selon l'invention appliquée à ce mélange 3a via un fluide d'extraction F. On obtient ainsi un extrait E' comprenant, outre le fluide d'extraction F, des molécules de B et de B', et un raffinat R' comprenant les molécules supportées LITS-A-B.

L'étape 5 de ce procédé illustre une troisième opération unitaire de « clivage du support » qui consiste à « cliver » puis à séparer, par une extraction liquide-liquide selon l'invention appliquée à ce raffinat R' via un fluide d'extraction F, à séparer les molécules de support LITS (raffinat R" obtenu) du produit de réaction A-B supporté (extrait E" obtenu).

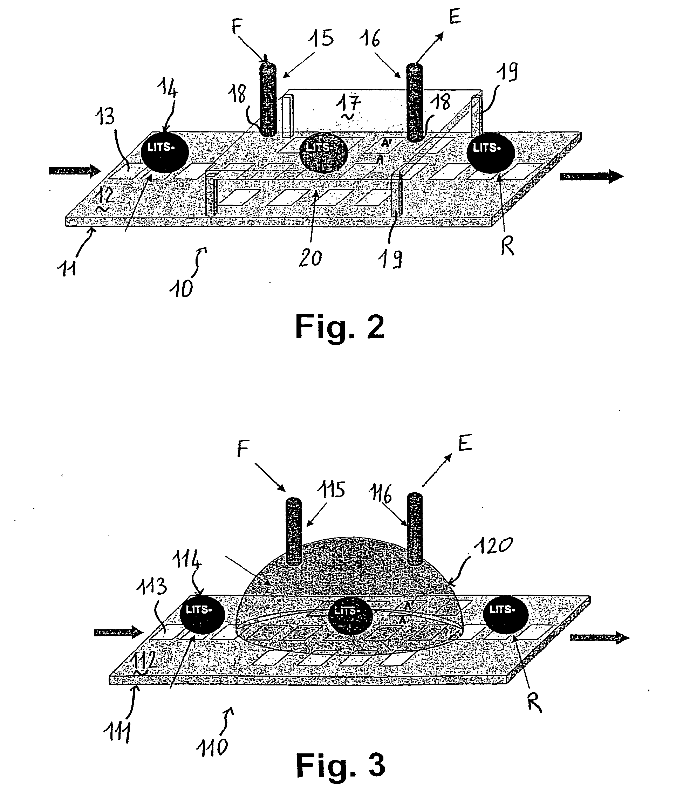

Le système microfluidique 10 selon l'invention qui est illustré à la figure 2 comporte un substrat 11 dont une surface 12 est recouverte d'électrodes 13 qui sont par exemple à base d'or et qui sont recouvertes d'un isolant électrique, tel que de la silice ou du nitrure de silicium. Ces électrodes 13 sont adaptées pour permettre le déplacement sur la surface 12, avantageusement par électro-mouillage, des microgouttes 14 d'une phase liquide comprenant au moins un liquide ionique fonctionnalisé (par exemple LITS-A) et des substances libres en solution (A et A'), cf. figure 1.

Ce système 10 est pourvu de capillaires 15 et 16 qui sont respectivement destinés à amener un fluide liquide d'extraction F sur la surface 12 et à l'en extraire par convection forcée et qui s'étendent et débouchent tous deux au-dessus de la surface 12 et perpendiculairement à cette dernière, de sorte à obtenir un bain d'extraction 20 à base du fluide d'extraction qui soit localisé sur la surface 12 pour l'extraction d'au moins un composé chimique ou biologique (A, A' par exemple, cf. figure 1) de la phase liquide.

A cet effet, le système 10 comporte une plaque 17, dans laquelle débouchent les capillaires 15 et 16 via deux orifices 18 respectifs de la plaque 17, de sorte que ces capillaires 15 et 16 communiquent avec le bain 20. La plaque 17 est pourvue à sa périphérie de supports verticaux 19 montés sur la surface 12, et cette plaque 17 délimite avec la surface 12 un volume confiné de forme parallélépipédique pour ce bain 20, à l'instar d'un « capot » ouvert. Comme illustré à la figure 2, ce bain 20 communique sensiblement avec tout l'espace latéral ambiant compris entre la surface 12 et la plaque 17, pour permettre le déplacement au contact des électrodes 13 de chaque microgoutte 14 par électro-mouillage, dans le bain 20 et en amont et en aval de ce dernier.

Par exemple en relation avec l'opération unitaire 2 de la figure 1, le système 10 est adapté pour l'obtention, par diffusion forcée de la microgoutte 14 dans le bain 20 et mise en circulation en continu du fluide d'extraction F:
- via le capillaire d'extraction 16, d'un extrait E comprenant le fluide d'extraction et les composés A, A', et
- via les électrodes 13, d'une microgoutte de raffinat R comprenant le liquide ionique greffé LITS-A à l'état pur en vue d'une autre opération, e.g. une autre réaction chimique ou biologique ou une analyse.

Pour la description suivante des autres modes de réalisation de l'invention relatifs aux figures 3 à 5, on a utilisé des références numériques augmentées de 100 pour désigner des éléments du système microfluidique correspondant qui sont identiques ou analogues à ceux de la figure 2.

Le système microfluidique 110 selon l'invention qui est illustré à la figure 3 se différencie uniquement du système 10 de la figure 2, en ce qu'il est adapté pour former un bain d'extraction 120 constitué d'une goutte déposée sur la surface 112 via le capillaire d'amenée 115 et retirée de cette surface 112 par aspiration via le capillaire 116, de telle sorte que le fluide d'extraction F soit en circulation via ces capillaires 115 et 116. La goutte formant ce bain d'extraction 120 est ainsi prévue pour être formée sous les capillaires 115 et 116, et elle communique avec tout l'espace ambiant situé au-dessus de la surface 112.

Par exemple en relation avec l'opération unitaire 2 de la figure 1, le système 110 est adapté pour l'obtention, par diffusion forcée de la microgoutte 114 dans la goutte formant le bain 120 et mise en circulation en continu du fluide d'extraction F :
- via le capillaire 116, d'un extrait E comprenant le fluide d'extraction F et les composés A, A', et
- via les électrodes 113, d'une microgoutte de raffinat R qui est déplacée sur la surface 112 et qui comprend le liquide ionique greffé LITS-A à l'état pur en vue d'une autre opération, e.g. une réaction ou une analyse.

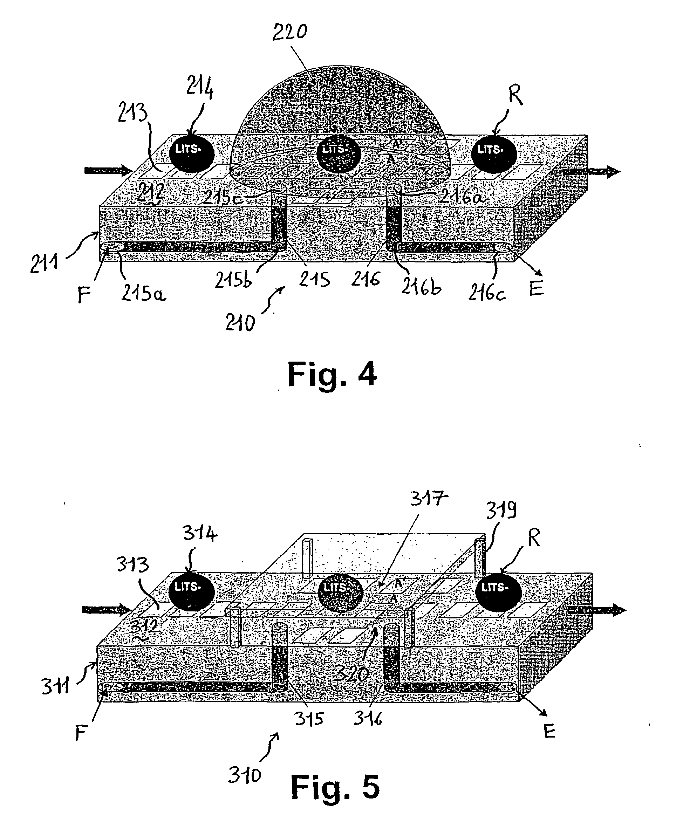

Le système microfluidique 210 selon l'invention qui est illustré à la figure 4 se différencie uniquement du système 110 de la figure 3, en ce qu'il est pourvu de deux canaux 215 et 216 enterrés dans le substrat 211 et affleurant la surface 212 de ce substrat 211 perpendiculairement à cette dernière, en lieu et place des capillaires 115 et 116.

Le canal d'amenée 215 est adapté pour recevoir le fluide d'extraction F par son entrée 215a débouchant dans une face perpendiculaire à la surface 212 et, via un coude 215b à angle droit qu'il comporte, pour le délivrer sous forme de goutte par sa sortie 215c affleurant la surface 212, de manière à former le bain d'extraction 220 par dépôt et aspiration en continu de cette goutte. Le canal d'extraction 216 est adapté pour retirer du bain 220, par l'intermédiaire du fluide d'extraction F, l'extrait E contenant par exemple le réactif en excès A et le sous-produit A', par son entrée 216a affleurant la surface 212 et, via un coude 216b à angle droit qu'il comporte, pour le retirer du substrat 211 par une sortie 216c débouchant sur une autre face du substrat 211 perpendiculaire à la face 212.

Par exemple en relation avec l'opération unitaire 2 de la figure 1, le système 210 est adapté pour l'obtention, par diffusion forcée de la microgoutte 214 dans la goutte formant le bain 220 et mise en circulation en continu du fluide d'extraction F :
- via le capillaire 216, d'un extrait E comprenant le fluide d'extraction F et les composés A, A', et
- via les électrodes 213, d'une microgoutte de raffinat R qui est déplacée sur la surface 212 et qui comprend le liquide ionique greffé LITS-A à l'état pur en vue d'une autre opération, e.g. une réaction ou une analyse.

Dans un troisième mode de réalisation non représenté, il peut être avantageux de prévoir un capillaire d'amenée de fluide par le haut et un capillaire d'extraction par le substrat, sans plaque formant capot. L'avantage de cette combinaison est de cumuler les avantages de chacun des deux autres modes de réalisation :
- technologie simplifiée du fait de l'absence de capot ;
- pas de passage d'un milieu ouvert à un milieu confiné, du fait de l'absence de capot ;
- positionnement parfait de la zone d'extraction sur le système microfluidique, par centrage du capillaire d'amenée sur cette zone ;
- possibilité de retirer entièrement le liquide d'extraction par le capillaire prévu dans le substrat.

Dans ces modes de réalisation impliquant des déplacements par électro-mouillage, il peut être avantageux d'ajouter une contre-électrode au système, par exemple sous forme de fil conducteur en contact avec la microgoutte.

De la même manière, le système microfluidique 310 selon l'invention qui est illustré à la figure 5 se différencie uniquement du système 10 de la figure 2, en ce qu'il est pourvu de deux canaux 315 et 316 enterrés dans le substrat 311 et analogues aux canaux 215 et 216 de la figure 4.

A l'instar des canaux 215 et 216 de la figure 4, les canaux 315 et 316 affleurent la surface 312 du substrat 311 entre des supports verticaux 319 qui relient la périphérie de la plaque 317 à la surface 312, de sorte à former un volume confiné formant le bain d'extraction 320.

Par exemple en relation avec l'opération unitaire 2 de la figure 1, le système 310 est adapté pour l'obtention, par diffusion forcée de la microgoutte 314 dans le bain 320 et mise en circulation en continu du fluide d'extraction F:
- via le capillaire d'extraction 316, d'un extrait E comprenant le fluide d'extraction et les composés A, A', et
- via les électrodes 313, d'une microgoutte de raffinat R comprenant le liquide ionique greffé LITS-A à l'état pur en vue d'une autre opération, e.g. une réaction ou une analyse.

On notera que les systèmes microfluidiques 10 à 310 selon l'invention permettent de récupérer séparément les deux phases liquides constituées de l'extrait E et du raffinat R. Ainsi, pour les étapes 2 et 4 de « purification » de la figure 1, on récupère la microgoutte de LITS-A ou LITS-A-B et l'on élimine séparément le fluide d'extraction F contenant les impuretés A', B' et les réactifs en excès A et B, alors que pour l'étape 5 de « clivage du support », on récupère le produit de réaction A-B dans le fluide d'extraction F et l'on recycle séparément la microgoutte de LITS, par exemple pour d'autres réactions.

On met avantageusement en oeuvre le procédé d'extraction liquide-liquide selon l'invention de la manière suivante.

On déplace les microgouttes 14 à 314 électriquement conductrices à base de liquide(s) ionique(s) fonctionnalisé(s) par la technique d'électro-mouillage appelée « EWOD » (ElectroWetting on Dielectric), en appliquant des tensions de 10 à 100 V. A cet effet, les électrodes 13 à 313 sont au préalable isolées et traitées en surface pour l'obtention d'un mouillage faible des microgouttes 14 à 314 plongées dans le bain d'extraction 20 à 320. Contrairement à ces microgouttes 14 à 314, le fluide d'extraction F choisi, tel qu'un solvant organique volatil (e.g. l'éther diéthylique, l'acétate d'éthyle, ou un solvant chloré), présente une conductivité électrique très faible, de sorte qu'il n'est pas déplacé à la surface 12 à 312 du système microfluidique 10 à 310.

On met en oeuvre l'extraction selon l'invention à température ambiante (i.e. typiquement comprise entre 20 et 25° C) ou éventuellement en refroidissant légèrement le système microfluidique 10 à 310, pour limiter l'évaporation du fluide d'extraction F.

Afin d'optimiser le transfert de matière par diffusion forcée entre la microgoutte 14 à 314 et le fluide d'extraction F et la localisation du bain d'extraction 20 à 320 sur la surface 12 à 312, on déplace en continu cette microgoutte dans ledit bain autour d'un point central de ce dernier.

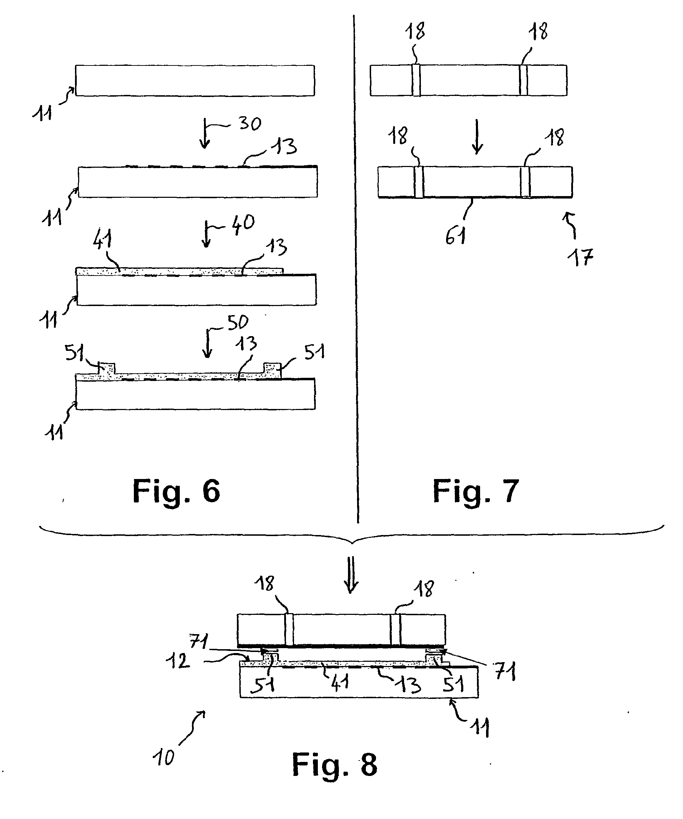

Les figures 6 à 8 illustrent, à titre exemplatif, les étapes essentielles d'un procédé de fabrication du système microfluidique 10 selon l'invention incorporant la plaque 17.

Comme illustré à la figure 6, on obtient le substrat 11 selon l'invention essentiellement en mettant en oeuvre les étapes suivantes :
- dans une première étape 30, on dépose par photolithographie un réseau d'électrodes 13 en or sur le substrat 11, qui est par exemple à base de verre « Pyrex » ou de silicium oxydé ;
- dans une seconde étape 40, on isole électriquement ces électrodes 13 par un dépôt 41 de silice ou de Si₃N₄ réalisé par « PECVD » (« Plasma Enhanced Chemical Vapor Deposition » : dépôt chimique en phase vapeur assisté par plasma), puis on soumet le dépôt 41 obtenu à une photolithographie pour obtenir un dégagement des reprises de contact ; puis
- dans une troisième étape 50, on dépose par photolithographie sur le substrat 11 ainsi traité des « murs » 51 de résine photosensible « SU8 » prévus pour exercer une fonction analogue à celle des supports 19 de la figure 2, en vue de l'assemblage ultérieur de la contre-électrode 17 sur le substrat 11.

Comme illustré à la figure 7, lorsqu'on souhaite une contre-électrode sur la plaque 17, on l'obtient en déposant par photolithographie, sur une plaque en verre « Pyrex » ou en matière plastique percée d'ouvertures 18, un revêtement 61 en « ITO » (« Indium Tin Oxide » : oxyde d'indium et d'étain) sur la face inférieure de la plaque qui est destinée à se trouver en regard des électrodes 13 du substrat 11. Eventuellement, cette couche en « ITO » peut être recouverte d'une couche dont l'hydrophobicité est contrôlée, afin d'améliorer le déplacement des gouttes.

Comme illustré à la figure 8, on assemble la contre-électrode 17 ainsi obtenue sur les « murs » 51 du substrat 11 par la technique de « sérigraphie de colle », en déposant un film de colle homogène 71 à l'interface entre le revêtement 61 et ces « murs » 51. Ce film de colle 71 présente une épaisseur inférieure à quelques micromètres, et la colle utilisée est par exemple commercialisée par la société SUPRATEC sous la dénomination « DELO-KATIOBOND 45952 ». On pourra par exemple se référer au document de Brevet WO-A-00/77509 pour une description précise de cette technique de « sérigraphie de colle ».

## Revendications

1. Procédé d'extraction d'au moins un composé chimique ou biologique (A, A' ou B, B' ou A-B) d'une phase liquide comprenant au moins un liquide ionique fonctionnalisé (LITS-A ou LITS-A-B ou LITS), par l'intermédiaire d'un fluide liquide d'extraction (F) qui est immiscible avec le(s)dit(s) liquide(s) ionique(s), **caractérisé en ce que** ledit procédé comprend un déplacement, sur une surface (12, 112, 212, 312) d'un système microfluidique (10, 110, 210, 310), d'au moins une microgoutte (14, 114, 214, 314) de ladite phase liquide dans un bain d'extraction (20, 120, 220, 320) qui comprend ledit fluide d'extraction et qui est localisé sur ladite surface pour l'obtention en sortie dudit bain, sous l'effet d'un champ électrique, d'un extrait (E, E') s'éloignant de ladite surface qui est à base dudit fluide d'extraction et qui est enrichi en ledit ou l'un au moins desdits composé(s), et d'un raffinat (R, R') évoluant sur ladite surface qui est à base dudit liquide(s) ionique(s) et qui est appauvri en ledit ou l'un au moins desdits composé(s).

2. Procédé selon la revendication 1, **caractérisé en ce que** l'on déplace ladite microgoutte (14, 114, 214, 314) dans ledit bain (20, 120, 220, 320) sous l'effet dudit champ électrique, de telle manière qu'elle y évolue au contact de ladite surface (12, 112, 212, 312).

3. Procédé selon la revendication 1 ou 2, **caractérisé en ce que** l'on met en circulation par convection forcée et en continu ledit fluide d'extraction (F) dans ledit bain (20, 120, 220, 320), pour que ledit raffinat (R, R') obtenu soit constitué dudit ou desdits liquide(s) ionique(s) (LITS-A ou LITS-A-B ou LITS).

4. Procédé selon la revendication 2 ou 3, **caractérisé en ce que** l'on déplace par électro-mouillage ladite microgoutte (14, 114, 214, 314) au contact de ladite surface (12, 112, 212, 312), dans ledit bain (20, 120, 220, 320) et en amont et en aval de ce dernier, via une pluralité d'électrodes (13, 113, 213, 313) recouvrant ladite surface, ladite microgoutte étant électriquement conductrice à la différence dudit fluide d'extraction (F) dont la conductivité électrique est pratiquement nulle.

5. Procédé selon une des revendications précédentes, **caractérisé en ce que** l'on déplace ladite microgoutte (14, 114, 214, 314) selon un trajet prédéterminé, préférentiellement autour d'une zone centrale dudit bain (20, 120, 220, 320).

6. Procédé selon une des revendications 1 à 5, **caractérisé en ce que** ledit bain (20, 120) et ledit extrait (E, E') sont respectivement obtenus par au moins un courant d'amenée dudit fluide d'extraction (F) et par au moins un courant d'extraction dudit bain, l'un au moins de ces courants d'amenée et d'extraction s'étendant et débouchant au-dessus de ladite surface (12, 112).

7. Procédé selon une des revendications 1 à 5, **caractérisé en ce que** ledit bain (220, 320) et ledit extrait (E, E') sont respectivement obtenus par au moins un courant d'amenée dudit fluide d'extraction (F) et par au moins un courant d'extraction dudit bain, l'un au moins de ces courants d'amenée et d'extraction s'étendant dans ledit système microfluidique (210, 310) en débouchant à ladite surface (212, 312).

8. Procédé selon la revendication 6 ou 7, **caractérisé en ce que** lesdits courants d'amenée et d'extraction débouchent dans ledit bain (20, 120, 220, 320) sensiblement perpendiculairement à ladite surface (12, 112, 212,312).

9. Procédé selon une des revendications 6 à 8, **caractérisé en ce que** ledit courant d'extraction est recyclé dans ledit courant d'amenée.

10. Procédé selon une des revendications précédentes, **caractérisé en ce que** ledit bain d'extraction (20, 120, 220, 320) est ouvert sur l'espace ambiant en au moins deux de ses côtés opposés, pour le déplacement au contact de ladite surface (1, 112, 212, 312) de ladite microgoutte (14, 114, 214, 314) en amont et en aval dudit bain.

11. Procédé selon la revendication 10, **caractérisé en ce que** l'on dépose ledit bain (120, 220) sur ladite surface (112, 212) et on l'en retire par aspiration pour l'obtention dudit extrait (E, E'), de telle sorte que ledit bain communique sensiblement avec tout l'espace ambiant situé au-dessus de ladite surface.

12. Procédé selon la revendication 10 ou 11, **caractérisé en ce que** ledit bain d'extraction (120, 220) est formé par une goutte dudit fluide d'extraction (F) qui communique avec tout l'espace ambiant situé au-dessus de ladite surface (112, 212).

13. Procédé selon les revendications 6 et 12, **caractérisé en ce que** l'un au moins desdits courants d'amenée et d'extraction circule à l'intérieur d'un capillaire (115 ou 116) sous lequel est formée ladite goutte (120) dudit fluide d'extraction (F).

14. Procédé selon les revendications 7 et 12, **caractérisé en ce que** l'un au moins desdits courants d'amenée et d'extraction circule à l'intérieur d'un canal enterré (215 ou 216) dans ledit système microfluidique (210) sur lequel est formée ladite goutte (220) dudit fluide d'extraction (F).

15. Procédé selon la revendication 10 ou 11, **caractérisé en ce que** ledit bain d'extraction (20, 320) est formé par un volume confiné dudit fluide d'extraction (F) qui est délimité par deux parois respectivement inférieure et supérieure formées par ladite surface (12, 312) et par une plaque (17, 317) montée sur cette dernière, ledit volume communiquant sensiblement avec tout l'espace ambiant latéral compris entre lesdites parois.

16. Procédé selon les revendications 6 et 15, **caractérisé en ce que** l'un au moins desdits courants d'amenée et d'extraction circule à l'intérieur d'un capillaire (15 ou 16) débouchant dans un orifice (18) de ladite plaque (17).

17. Procédé selon les revendications 7 et 15, **caractérisé en ce que** l'un au moins desdits courants d'amenée et d'extraction circule à l'intérieur d'un canal enterré (315 ou 316) dans ledit système microfluidique (320) et affleurant ladite surface (312).

18. Procédé selon une des revendications précédentes, **caractérisé en ce que** ladite microgoutte (14, 114, 214, 314) de ladite phase liquide présente un volume compris entre 0,1 µL et 10 µL.

19. Procédé selon une des revendications 1 à 18, **caractérisé en ce que** ladite microgoutte (14, 114, 214, 314) soumise à l'extraction comprend un mélange :
- de molécules (LITS-A ou LITS-A-B) dudit ou desdits composé(s) chimique(s) ou biologique(s) (A ou A-B) supportées par ledit liquide ionique fonctionnalisé (LITS), et
- d'un excès dudit ou desdits composé(s) chimique(s) ou biologique(s) (A ou B) n'ayant pas réagi avec lesdites molécules supportées (LITS-A ou LITS-A-B) et/ou du ou des sous-produits (A' ou B') de la réaction dudit liquide ionique fonctionnalisé (LITS ou LITS-A) avec le(s)dit(s) composé(s) chimique(s) ou biologique(s) (A ou B),
et **en ce que** ledit extrait (E, E') comprend un mélange, d'une part, dudit fluide d'extraction (F) et, d'autre part, dudit excès dudit ou desdits composé(s) n'ayant pas réagi et/ou dudit ou desdits sous-produits de réaction, ledit raffinat (R, R') comprenant lesdites molécules supportées.

20. Procédé selon une des revendications 1 à 19, **caractérisé en ce que** ladite microgoutte (14, 114, 214, 314) soumise à l'extraction comprend des molécules (LITS-A-B) desdits composés chimiques ou biologiques (A-B) supportées par ledit liquide ionique fonctionnalisé (LITS), et **en ce que** ledit extrait (E") comprend, par clivage dudit support, un mélange dudit fluide d'extraction (F) et desdits composés (A-B) séparés dudit liquide ionique fonctionnalisé (LITS), ledit raffinat (R") comprenant ce dernier.

21. Procédé selon une des revendications précédentes, **caractérisé en ce que** ledit ou l'un au moins desdits liquides ioniques fonctionnalisés (LITS) est choisi dans le groupe constitué par un sel d'ammonium, un sel d'imidazolium, un sel de phosphonium, un sel d'onium et un mélange de plusieurs de ces sels.

22. Procédé selon une des revendications 1 à 21, **caractérisé en ce que** ledit fluide d'extraction (F) comprend au moins un solvant organique volatil choisi dans le groupe constitué par l'éther diéthylique, l'acétate d'éthyle et les solvants chlorés tels que le dichlorométhane, le chloroforme ou le tétrachlorure de carbone.

23. Procédé selon une des revendications 1 à 22, **caractérisé en ce que** ledit fluide d'extraction (F) comprend au moins un solvant aqueux, tel que de l'eau soumise à une désionisation.

24. Système microfluidique (10, 110, 210, 310) pour la mise en oeuvre d'un procédé selon une des revendications précédentes, du type présentant un substrat (11, 111, 211, 311) dont une surface (12, 112, 212, 312) est recouverte d'électrodes (13, 113, 213, 313) adaptées pour y déplacer, sous l'effet d'un champ électrique, des microgouttes (14, 114, 214, 314) d'une phase liquide comprenant au moins un liquide ionique fonctionnalisé (LITS-A ou LITS-A-B), **caractérisé en ce que** ledit système est pourvu de moyens (15 et 16, 115 et 116, 215 et 216, 315 et 316) pour amener un fluide liquide d'extraction (F) sur ladite surface et pour l'en extraire par convection forcée, de sorte à obtenir un bain d'extraction (20, 120, 220, 320) qui soit localisé sur ladite surface pour l'extraction d'au moins un composé chimique ou biologique (A, A' ou B, B' ou A-B) de ladite phase liquide et qui soit ouvert sur l'espace ambiant en au moins deux de ses côtés opposés, pour le déplacement au contact de ladite surface de ladite microgoutte en amont et en aval dudit bain.

25. Système (110, 210) selon la revendication 24, **caractérisé en ce que** lesdits moyens (115 et 116, 215 et 216) pour amener et extraire ledit fluide d'extraction (F) sont adaptés pour que ledit bain d'extraction (120, 220) soit formé par une goutte dudit fluide d'extraction communiquant avec tout l'espace ambiant situé au-dessus de ladite surface (112, 212).

26. Système (10, 310) selon la revendication 24, **caractérisé en ce qu'**il comporte en outre une plaque (17, 317) qui est montée sur ladite surface (12, 312) via des supports verticaux (19, 319) et qui délimite avec ladite surface deux parois respectivement supérieure et inférieure définissant un volume confiné pour ledit bain (20, 320), lequel communique sensiblement avec tout l'espace latéral ambiant compris entre lesdites parois.

27. Système (10, 110) selon une des revendications 24 à 26, **caractérisé en ce que** lesdits moyens pour amener et extraire ledit fluide d'extraction (F) comportent respectivement deux capillaires (15 et 16, 115 et 116), dont l'un au moins s'étend et débouche au-dessus de ladite surface (12, 112) et perpendiculairement à cette dernière.

28. Système (110) selon les revendications 25 et 27, **caractérisé en ce que** ladite goutte formant ledit bain d'extraction (120) est prévue pour être formée sur ladite surface (112) et sous le(s)dit(s) capillaire(s) (115 et/ou 116) s'étendant et débouchant au-dessus de ladite surface.

29. Système (10) selon les revendications 26 et 27, **caractérisé en ce que** l'un au moins desdits capillaires (15 et 16) débouche dans un orifice (18) de ladite plaque (17), de sorte à communiquer avec ledit volume confiné formant ledit bain (20).

30. Système (210, 310) selon la revendication 24, **caractérisé en ce que** lesdits moyens pour amener et retirer ledit fluide d'extraction (F) comportent respectivement deux canaux (215 et 216, 315 et 316) dont l'un au moins est enterré dans ledit système et affleure ladite surface (212, 312) perpendiculairement à cette dernière, de sorte à communiquer avec ledit bain (220, 320).

31. Système (210) selon les revendications 25 et 30, **caractérisé en ce que** lesdits canaux (215 et 216) sont adaptés pour que ladite goutte formant ledit bain (220) recouvre les extrémités respectives (215c et 216a) desdits canaux.

32. Système (310) selon les revendications 26 et 30, **caractérisé en ce que** lesdits canaux (315 et 316) affleurent ladite surface (312) entre des supports verticaux (319) qui relient la périphérie de ladite plaque (317) à ladite surface, de sorte à former ledit volume confiné formant ledit bain (320).

33. Système (10, 110, 210, 310) selon une des revendications 24 à 32, **caractérisé en ce que** lesdites électrodes (13, 113, 213, 313), telles que des électrodes à base d'or, sont recouvertes d'un isolant électrique (41), tel que de la silice ou du nitrure de silicium.

34. Système (10, 310) selon une des revendications 26, 29 et 32, **caractérisé en ce que** ladite plaque (17, 317) est à base de verre borosilicaté ou d'une matière plastique et **en ce que** lesdits supports verticaux (19, 319, 51) sont à base d'une résine photosensible, telle qu'une résine époxy, ladite plaque étant déposée sur lesdits supports via une colle (71).

## Claims

1. A process for the extraction of at least one chemical or biological compound (A, A' or B, B' or A-B) from a liquid phase comprising at least one functionalized ionic liquid (TSIL-A or TSIL-A-B or TSIL), via a liquid extraction fluid (F) which is immiscible with said ionic liquid(s), **characterized in that** said process comprises moving, on a surface (12, 112, 212, 312) of a microfluidic system (10, 110, 210, 310), at least one microdrop (14, 114, 214, 314) of said liquid phase in an extraction bath (20, 120, 220, 320) which comprises said extraction fluid and which is located on said surface in order to obtain, at the outlet of said bath, under the effect of an electric field, an extract (E, E') moving away from said surface which is based on said extraction fluid and which is enriched in said or at least one of said compound(s), and a raffinate (R, R') moving about on said surface which is based on said ionic liquid(s) and which is depleted in said or at least one of said compound(s).

2. The process as claimed in claim 1, **characterized in that** the said microdrop (14, 114, 214, 314) is moved in said bath (20, 120, 220, 320) under the effect of said electric field in such a way that it moves about therein in contact with said surface (12, 112, 212, 312) .

3. The process as claimed in claim 1 or 2, **characterized in that** said extraction fluid (F) is circulated in said bath (20, 120, 220, 320) by forced convection and continuously in order for said raffinate (R, R') obtained to consist in said ionic liquid(s) (TSIL-A or TSIL-A-B or TSIL).

4. The process as claimed in claim 2 or 3, **characterized in that** said microdrop (14, 114, 214, 314) is moved in contact with said surface (12, 112, 212, 312) by electrowetting in said bath (20, 120, 220, 320) and upstream and downstream of the latter via a plurality of electrodes (13, 113, 213, 313) covering said surface, said microdrop being electrically conducting, unlike said extraction fluid (F), the electrical conductivity of which is substantially zero.

5. The process as claimed in one of the preceding claims, **characterized in that** said microdrop (14, 114, 214, 314) is moved along a predetermined path, preferably around a central region of said bath (20, 120, 220, 320).

6. The process as claimed in one of claims 1 to 5, **characterized in that** said bath (20, 120) and said extract (E, E') are respectively obtained by at least one introduction stream for introducing said extraction fluid (F) and by at least one extraction stream from said bath, at least one of these introduction and extraction streams extending and emerging above said surface (12, 112).

7. The process as claimed in one of claims 1 to 5, **characterized in that** said bath (220, 320) and said extract (E, E') are respectively obtained by at least one introduction stream for introducing said extraction fluid (F) and by at least one extraction stream from said bath, at least one of these introduction and extraction streams extending into said microfluidic system (210, 310) on emerging at said surface (212, 312) .

8. The process as claimed in claim 6 or 7, **characterized in that** said introduction and extraction streams emerge in said bath (20, 120, 220, 320) substantially perpendicular to said surface (12, 112, 212, 312).

9. The process as claimed in one of claims 6 to 8, **characterized in that** said extraction stream is recycled in said introduction stream.

10. The process as claimed in one of the preceding claims, **characterized in that** said extraction bath (20, 120, 220, 320) is open to the surrounding space on at least two of its opposite sides, for moving, in contact with said surface (1, 112, 212, 312), said microdrop (14, 114, 214, 314) upstream and downstream of said bath.

11. The process as claimed in claim 10, **characterized in that** said bath (120, 220) is deposited on said surface (112, 212) and an operation for removal of the bath therefrom is carried out by suction in order to obtain said extract (E, E'), in such a way that said bath is in communication substantially with the entire surrounding space situated above said surface.

12. The process as claimed in claim 10 or 11, **characterized in that** said extraction bath (120, 220) is formed by a drop of said extraction fluid (F) which is in communication with the entire surrounding space situated above said surface (112, 212).

13. The process as claimed in claims 6 and 12, **characterized in that** at least one of said introduction and extraction streams moves along inside a capillary (115 or 116) under which said drop (120) of said extraction fluid (F) is formed.

14. The process as claimed in claims 7 and 12, **characterized in that** at least one of said introduction and extraction streams moves along inside a channel embedded (215 or 216) in said microfluidic system (210) on which said drop (220) of said extraction fluid (F) is formed.

15. The process as claimed in claim 10 or 11, **characterized in that** said extraction bath (20, 320) is formed by a confined volume of said extraction fluid (F) which is delimited by two respectively lower and upper walls formed by said surface (12, 312) and by a sheet (17, 317) mounted on the latter, said volume being in communication substantially with the entire lateral surrounding space between said walls.

16. The process as claimed in claims 6 and 15, **characterized in that** at least one of said introduction and extraction streams moves along inside a capillary (15 or 16) emerging in an orifice (18) of said sheet (17).

17. The process as claimed in claims 7 and 15, **characterized in that** at least one of said introduction and extraction streams moves along inside a channel embedded (315 or 316) in said microfluidic system (320) and which is flush with said surface (312).

18. The process as claimed in one of the preceding claims, **characterized in that** said microdrop (14, 114, 214, 314) of said liquid phase exhibits a volume of between 0.1 µl and 10 µl.

19. The process as claimed in one of claims 1 to 18, **characterized in that** said microdrop (14, 114, 214, 314) subjected to the extraction comprises a mixture:
- of molecules (TSIL-A or TSIL-A-B) of said chemical or biological compound(s) (A or A-B) supported by said functionalized ionic liquid (TSIL), and
- of an excess of said chemical or biological compound(s) (A or B) which have not reacted with said supported molecules (TSIL-A or TSIL-A-B) and/or of the byproduct(s) (A' or B') of the reaction of said functionalized ionic liquid (TSIL or TSIL-A) with said chemical or biological compound(s) (A or B),
and **in that** said extract (E, E') comprises a mixture, on the one hand, of said extraction fluid (F) and, on the other hand, of said excess of said unreacted compound(s) and/or of said reaction byproduct(s), said raffinate (R, R') comprising said supporting molecules.

20. The process as claimed in one of claims 1 to 19, **characterized in that** said microdrop (14, 114, 214, 314) subjected to the extraction comprises molecules (TSIL-A-B) of said chemical or biological compounds (A-B) supported by said functionalized ionic liquid (TSIL), and **in that** said extract (E") comprises, by cleavage of said support, a mixture of said extraction fluid (F) and of said compounds (A-B) separated from said functionalized ionic liquid (TSIL), said raffinate (R") comprising the latter.

21. The process as claimed in one of the preceding claims, **characterized in that** said or at least one of said functionalized ionic liquids (TSIL) is chosen from the group consisting of an ammonium salt, an imidazolium salt, a phosphonium salt, an onium salt and a mixture of several of these salts.

22. The process as claimed in one of claims 1 to 21, **characterized in that** said extraction fluid (F) comprises at least one volatile organic solvent chosen from the group consisting of diethyl ether, ethyl acetate and chlorinated solvents, such as dichloromethane, chloroform or carbon tetrachloride.

23. The process as claimed in one of claims 1 to 22, **characterized in that** said extraction fluid (F) comprises at least one aqueous solvent, such as water subjected to deionization.

24. A microfluidic system (10, 110, 210, 310) for the implementation of a process as claimed in one of the preceding claims, of the type exhibiting a substrate (11, 111, 211, 311), one surface (12, 112, 212, 312) of which is covered with electrodes (13, 113, 213, 313) suitable for moving thereon, under the effect of an electric field, microdrops (14, 114, 214, 314) of a liquid phase comprising at least one functionalized ionic liquid (TSIL-A or TSIL-A-B), **characterized in that** said system is provided with means (15 and 16, 115 and 116, 215 and 216, 315 and 316) for introducing a liquid extraction fluid (F) onto said surface and for extracting it therefrom by forced convection, so as to obtain an extraction bath (20, 120, 220, 320) which is located on said surface for the extraction of at least one chemical or biological compound (A, A' or B, B' or A-B) from said liquid phase and which is open to the surrounding space on at least two of its opposite sides, for moving, in contact with said surface, said microdrop upstream and downstream of said bath.

25. The system (110, 210) as claimed in claim 24, **characterized in that** said means (115 and 116, 215 and 216) for introducing and extracting said extraction fluid (F) are appropriate for said extraction bath (120, 220) to be formed by a drop of said extraction fluid in communication with the entire surrounding space situated above said surface (112, 212).

26. The system (10, 310) as claimed in claim 24, **characterized in that** it additionally comprises a sheet (17, 317) which is mounted on said surface (12, 312) via vertical supports (19, 319) and which delimits, with said surface, two respectively upper and lower walls defining a confined volume for said bath (20, 320), which is in communication substantially with the entire lateral surrounding space between said walls.

27. The system (10, 110) as claimed in one of claims 24 to 26, **characterized in that** said means for introducing and extracting said extraction fluid (F) respectively comprise two capillaries (15 and 16, 115 and 116), at least one of which extends and emerges above said surface (12, 112) and perpendicular to the latter.

28. The system (110) as claimed in claims 25 and 27, **characterized in that** said drop forming said extraction bath (120) is designed to be formed on said surface (112) and under said capillary(ies) (115 and/or 116) extending and emerging above said surface.

29. The system (10) as claimed in claims 26 and 27, **characterized in that** at least one of said capillaries (15 and 16) emerges in an orifice (18) of said sheet (17) so as to be in communication with said confined volume forming said bath (20).

30. The system (210, 310) as claimed in claim 24, **characterized in that** said means for introducing and withdrawing said extraction fluid (F) respectively comprise two channels (215 and 216, 315 and 316), at least one of which is embedded in said system and is flush with said surface (212, 312) perpendicular to the latter, so as to be in communication with said bath (220, 320).

31. The system (210) as claimed in claims 25 and 30, **characterized in that** said channels (215 and 216) are appropriate for said drop forming said bath (220) to cover the respective ends (215c and 216a) of said channels.

32. The system (310) as claimed in claims 26 and 30, **characterized in that** said channels (315 and 316) are flush with said surface (312) between vertical supports (319) which connect the periphery of said sheet (317) to said surface, so as to form said confined volume forming said bath (320).

33. The system (10, 110, 210, 310) as claimed in one of claims 24 to 32, **characterized in that** said electrodes (13, 113, 213, 313), such as electrodes based on gold, are covered with an electrical insulator (41), such as silica or silicon nitride.

34. The system (10, 310) as claimed in one of claims 26, 29 and 32, **characterized in that** said sheet (17, 317) is based on borosilicate glass or on a plastic and **in that** said vertical supports (19, 319, 51) are based on a photosensitive resin, such as an epoxy resin, said sheet being deposited on said supports via an adhesive (71).

## Patentansprüche

1. Verfahren zur Extraktion wenigstens einer chemischen oder biologischen Verbindung (A, A' oder B, B' oder A-B) aus einer flüssigen Phase, welche wenigstens eine funktionalisierte ionische Flüssigkeit (TSIL-A oder TSIL-A-B oder TSIL) umfasst, über ein flüssiges Extraktionsfluid (F), welches mit der wenigstens einen ionischen Flüssigkeit nicht mischbar ist, **dadurch gekennzeichnet, dass** das Verfahren umfasst: Bewegen, auf einer Oberfläche (12, 112, 212, 312) eines Mikrofluidik-Systems (10, 110, 210, 310), wenigstens eines Mikrotropfens (14, 114, 214, 314) der flüssigen Phase in einem Extraktionsbad (20, 120, 220, 320), welches das Extraktionsfluid umfasst und welches sich auf der Oberfläche befindet, um aus dem Bad unter Einwirkung eines elektrischen Feldes zu gewinnen ein sich von der Oberfläche entfernendes Extrakt (E, E'), welches auf Basis des Extraktionsfluids ist und welches mit der wenigstens einen Verbindung angereichert ist, und eines sich auf der Oberfläche bewegenden Raffinats (R, R'), welches auf Basis der wenigstens einen ionischen Flüssigkeit ist und welches an der wenigstens einen Verbindung verarmt ist.

2. Verfahren nach Anspruch 1, **dadurch gekennzeichnet, dass** der Mikrotropfen (14, 114, 214, 314) unter Einwirkung des elektrischen Feldes auf solche Weise in dem Bad (20, 120, 220, 320) bewegt wird, dass er sich in Kontakt mit der Oberfläche (12, 112, 212, 312) bewegt.

3. Verfahren nach Anspruch 1 oder 2, **dadurch gekennzeichnet, dass** das Extraktionsfluid (F) in dem Bad (20, 120, 220, 320) durch erzwungene Konvektion und anhaltend in Zirkulation versetzt wird, so dass das erhaltene Raffinat (R, R') durch die wenigstens eine ionische Flüssigkeit (TSIL-A oder TSIL-AB oder TSIL) gebildet ist.

4. Verfahren nach Anspruch 2 oder 3, **dadurch gekennzeichnet, dass** der Mikrotropfen (14, 114, 214, 314) durch Elektrobenetzung in Kontakt mit der Oberfläche (12, 112, 212, 312) in dem Bad (20, 120, 220, 320) und vorgelagert und nachgelagert dem letzteren über eine Vielzahl von die Oberfläche bedeckenden Elektroden (13, 113, 213, 313) bewegt wird, wobei der Mikrotropfen im Unterschied zu dem Extraktionsfluid (F), dessen elektrische Leitfähigkeit praktisch Null ist, elektrisch leitfähig ist.

5. Verfahren nach einem der vorhergehenden Ansprüche, **dadurch gekennzeichnet, dass** der Mikrotropfen (14, 114, 214, 314) entlang eines vorbestimmten Weges bewegt wird, vorzugsweise um einen zentralen Bereich des Bades (20, 120, 220, 320) herum.

6. Verfahren nach einem der Ansprüche 1-5, **dadurch gekennzeichnet, dass** das Bad (20, 120) und das Extrakt (E, E') erhalten werden über wenigstens einen Zufuhrstrom des Extraktionsfluids (F) bzw. über wenigstens einen Extraktionsstrom des Bades, wobei wenigstens einer dieser Zufuhr- und Extraktionsströme über der Oberfläche (12, 112) verläuft und mündet.

7. Verfahren nach einem der Ansprüche 1-5, **dadurch gekennzeichnet, dass** das Bad (220, 320) und das Extrakt (E, E') erhalten werden über wenigstens einen Zufuhrstrom des Extraktionsfluids (F) bzw. über wenigstens einen Extraktionsstrom des Bades, wobei wenigstens einer dieser Zufuhr- und Extraktionsströme in dem Mikrofluidik-System (210, 310) verläuft und an der Oberfläche (212, 312) mündet.

8. Verfahren nach Anspruch 6 oder 7, **dadurch gekennzeichnet, dass** die Zufuhr- und Extraktionsströme im Wesentlichen senkrecht zu der Oberfläche (12, 112, 212, 312) in dem Bad (20, 120, 220, 320) münden.

9. Verfahren nach einem der Ansprüche 6-8, **dadurch gekennzeichnet, dass** der Extraktionsstrom in dem Zufuhrstrom wiederverwendet wird.

10. Verfahren nach einem der vorhergehenden Ansprüche, **dadurch gekennzeichnet, dass** das Extraktionsbad (20, 120, 220, 320) für die Bewegung des Mikrotropfens (14, 114, 214, 314) im Kontakt mit der Oberfläche (12, 112, 212, 312) vorgelagert und nachgelagert dem Bad an wenigstens zwei seiner gegenüberliegenden Seiten offen zum umgebenden Raum ist.

11. Verfahren nach Anspruch 10, **dadurch gekennzeichnet, dass** das Bad (120, 220) auf der Oberfläche (112, 212) deponiert wird und es durch Absaugung zur Gewinnung des Extrakts (E, E') entfernt wird, so dass das Bad im Wesentlichen mit dem gesamten sich über der Oberfläche befindenden umgebenden Raum kommuniziert.

12. Verfahren nach Anspruch 10 oder 11, **dadurch gekennzeichnet, dass** das Extraktionsbad (120, 220) gebildet ist durch einen Tropfen des Extraktionsfluids (F), welcher mit dem gesamten sich über der Oberfläche (112, 212) befindenden umgebenden Raum kommuniziert.

13. Verfahren nach den Ansprüchen 6 und 12, **dadurch gekennzeichnet, dass** wenigstens einer der Zufuhr- und Extraktionsströme im Inneren einer Kapillare (115 oder 116) zirkuliert, unter welcher der Tropfen (120) des Extraktionsfluids (F) gebildet wird.

14. Verfahren nach den Ansprüchen 7 und 12, **dadurch gekennzeichnet, dass** wenigstens einer der Zufuhr- und Extraktionsströme im Inneren eines verdeckten Kanals (215 oder 216) in dem Mikrofluidik-System (210) zirkuliert, auf welchem der Tropfen (220) des Extraktionsfluids (F) gebildet wird.

15. Verfahren nach Anspruch 10 oder 11, **dadurch gekennzeichnet, dass** das Extraktionsbad (20, 320) gebildet ist durch ein begrenztes Volumen des Extraktionsfluids (F), welches eingegrenzt ist durch zwei, obere bzw. untere, Wände, welche durch die Oberfläche (12, 312) und durch eine über der letzteren angebrachte Platte (17, 317) gebildet sind, wobei das Volumen im Wesentlichen mit dem gesamten zwischen den Wänden enthaltenen seitlichen umgebenden Raum kommuniziert.

16. Verfahren nach den Ansprüchen 6 und 15, **dadurch gekennzeichnet, dass** wenigstens einer von den Zufuhr- und Extraktionsströmen im Inneren einer Kapillare (15 oder 16) zirkuliert, welche in einer Öffnung (18) der Platte (17) mündet.

17. Verfahren nach den Ansprüchen 7 und 15, **dadurch gekennzeichnet, dass** wenigstens einer der Zufuhr- und Extraktionsströme im Inneren eines verdeckten Kanals (315 oder 316) zirkuliert, welcher in den Mikrofluidik-System (320) liegt und an der Oberfläche (312) zu Tage tritt.

18. Verfahren nach einem der vorhergehenden Ansprüche, **dadurch gekennzeichnet, dass** der Mikrotropfen (14, 114, 214, 314) der flüssigen Phase ein Volumen aufweist, welches zwischen 0,1 µL und 10 µL enthalten ist.

19. Verfahren nach einem der Ansprüche 1-18, **dadurch gekennzeichnet, dass** der der Extraktion unterzogene Mikrotropfen (14, 114, 214, 314) eine Mischung umfasst:
- von Molekülen (TSIL-A oder TSIL-A-B) der wenigstens einen chemischen oder biologischen Verbindung (A oder A-B), welche von der funktionalisierten ionischen Flüssigkeit (TSIL) getragen sind, und
- eines Überschusses der wenigstens einen chemischen oder biologischen Verbindung (A oder B), welcher nicht mit den getragenen Molekülen (TSIL-A oder TSIL-A-B) reagiert hat, und/oder des Reaktionsnebenprodukts oder der Reaktionsnebenprodukte (A' oder B) der Reaktion der funktionalisierten ionischen Flüssigkeit (TSIL oder TSIL-A) mit der wenigstens einen chemischen oder biologischen Verbindung (A oder B), und dass das Extrakt (E, E') eine Mischung einerseits des Extraktionsfluids (F) und andererseits des Überschusses der wenigstens einen Verbindugn, welcher nicht reagiert hat, und/oder des Reaktionsnebenprodukts oder der Reaktionsnebenprodukte umfasst, wobei das Raffinat (R, R') die getragenen Mokeküle umfasst.

20. Verfahren nach einem der Ansprüche 1-19, **dadurch gekennzeichnet, dass** der der Extraktion unterzogene Mikrotropfen (14, 114, 214, 314) Moleküle (TSIL-A-B) der von der funktionalisierten ionischen Flüssigkeit (TSIL) getragenen chemischen oder biologischen Verbindungen (A-B) umfasst, und dass das Extrakt (E"), durch Spaltung des Trägers, eine Mischung des Extraktionsfluids (F) und der Verbindungen (A-B), welche von der funktionalisierten ionischen Flüssigkeit (TSIL) getrennt sind, umfasst, wobei das Raffinat (R") die letztere umfasst.

21. Verfahren nach einem der vorhergehenden Ansprüche, **dadurch gekennzeichnet, dass** die wenigstens eine funktionalisierte ionische Flüssigkeit (TSIL) ausgewählt ist aus der Gruppe bestehend aus einem Ammoniumsalz, einem Imidazoliumsalz, einem Phosphoniumsalz, einem Oniumsalz und einer Mischung von mehreren dieser Salze.

22. Verfahren nach einem der Ansprüche 1-21, **dadurch gekennzeichnet, dass** das Extraktionsfluid (F) wenigstens ein flüchtiges organisches Lösungsmittel umfasst, welches ausgewählt ist aus der Gruppe bestehend aus Diethylether, Ethylacetat und chlorierten Lösungsmitteln, wie z.B. Dichloromethan, Chloroform oder Tetrachlorkohlenstoff.

23. Verfahren nach einem der Ansprüche 1-22, **dadurch gekennzeichnet, dass** das Extraktionsfluid (F) wenigstens ein wässriges Lösungsmittel, wie z.B. einer Deionisation unterzogenes Wasser umfasst.

24. Mikrofluidik-System (10, 110, 210, 310) zur Durchführung eines Verfahrens nach einem der vorhergehenden Ansprüche, vom Typ, welcher ein Substrat (11, 111, 211, 311) aufweist, dessen eine Oberfläche (12, 112, 212, 312) mit Elektroden (13, 113, 213, 313) bedeckt ist, welche dazu ausgestaltet sind, darauf unter Einwirkung eines elektrischen Feldes Mikrotropfen (14, 114, 214, 314) einer flüssigen Phase zu bewegen, welche wenigstens eine funktionalisierte ionische Flüssigkeit (TSIL-A oder TSIL-A-B) umfasst, **dadurch gekennzeichnet, dass** das System mit Mitteln (15 und 16, 115 und 116, 215 und 216, 315 und 316) zur Zufuhr eines flüssigen Extraktionsfluids (F) auf die Oberfläche und Entnahme davon durch erzwungene Konvektion versehen ist, so dass ein Extraktionsbad (20, 120, 220, 320) erhalten wird, welches sich für die Extraktion wenigstens einer chemischen oder biologischen Verbindung (A, A' oder B, B' oder A-B) der flüssigen Phase auf der Oberfläche befindet und welches für die Bewegung des Mikrotropfens im Kontakt mit der Oberfläche vorgelagert und nachgelagert dem Bad an wenigstens zwei seiner gegenüberliegenden Seiten zum umgebenden Raum offen ist.

25. System (110, 210) nach Anspruch 24, **dadurch gekennzeichnet, dass** die Mittel (115 und 116, 215 und 216) zur Zufuhr und Entnahme des Extraktionsfluids (F) derart ausgestaltet sind, dass das Extraktionsbad (120, 220) gebildet ist durch einen Tropfen des Extraktionsfluids, welcher mit dem gesamten sich über der Oberfläche (112, 212) befindenden umgebenden Raum kommuniziert.

26. System (10, 310) nach Anspruch 24, **dadurch gekennzeichnet, dass** es außerdem eine Platte (17, 317) aufweist, welche durch vertikale Stützen (19, 319) über der Oberfläche (12, 312) angebracht ist und welche mit der Oberfläche zwei, obere bzw. untere, Wände begrenzt, welche ein begrenztes Volumen für das Bad (20, 320) definieren, welches im Wesentlichen mit dem gesamten seitlichen umgebenden Raum kommuniziert, welcher zwischen den Wänden enthalten ist.

27. System (10, 110) nach einem der Ansprüche 24-26, **dadurch gekennzeichnet, dass** die Mittel zur Zufuhr und Entnahme des Extraktionsfluids (F) zwei entsprechende Kapillaren (15 und 16, 115 und 116) umfassen, von welchen wenigstens eine sich über der Oberfläche (12, 112) und senkrecht zu der letzteren erstreckt.

28. System (110) nach den Ansprüchen 25 und 27, **dadurch gekennzeichnet, dass** der das Extraktionsbad (120) bildende Tropfen vorgesehen ist zur Ausbildung auf der Oberfläche (112) und unter der wenigstens einen Kapillare (115 und/oder 116), welche über der Oberfläche verläuft und mündet.

29. System (10) nach den Ansprüchen 26 und 27, **dadurch gekennzeichnet, dass** wenigstens eine der Kapillaren (15 und 16) in einer Öffnung (18) der Platte (17) mündet, so dass sie mit dem das Bad (20) bildenden begrenzten Volumen kommuniziert.

30. System (210, 310) nach Anspruch 24, **dadurch gekennzeichnet, dass** die Mittel zur Zufuhr und Entnahme des Extraktionsfluids (F) zwei entsprechende Kanäle (215 und 216, 315 und 316) umfassen, von welchen wenigstens einer in dem System verdeckt ist und an der Oberfläche (212, 312) senkrecht zu der letzteren zu Tage tritt, so dass er mit dem Bad (220, 320) kommuniziert.

31. System (210) nach den Ansprüchen 25 und 30, **dadurch gekennzeichnet, dass** die Kanäle (215 und 216) derart ausgestaltet sind, dass der das Bad (220) bildende Tropfen die jeweiligen Enden (215c und 216a) der Kanäle bedeckt.

32. System (310) nach den Ansprüchen 26 und 30, **dadurch gekennzeichnet, dass** die Kanäle (315 und 316) zwischen den vertikalen Stützen (319), welche die Umgebung der Platte (317) mit der Oberfläche verbinden, an der Oberfläche (312) zu Tage treten, so dass das das Bad (320) bildende begrenzte Volumen gebildet wird.

33. System (10, 110, 210, 310) nach einem der Ansprüche 24-32, **dadurch gekennzeichnet, dass** die Elektroden (13, 113, 213, 313), wie z.B. Elektroden auf Basis von Gold, mit einem elektrischen Isolator (41), wie z.B. Siliziumdioxid oder Siliziumnitrid, bedeckt sind.

34. System (10, 310) nach einem der Ansprüche 26, 29 und 32, **dadurch gekennzeichnet, dass** die Platte (17, 317) auf Borosilikatglas oder einem Kunststoffmaterial basiert und dass die vertikalen Stützen (19, 319, 51) auf einem lichtempfindlichen Harz basieren, wie z.B. einem Epoxy-Harz, wobei die Platte über einen Klebstoff (71) auf den Stützen aufgebracht ist.
